# EUROPÄISCHE PATENTSCHRIFT

(11) **EP 1 178 897 B1**
(45) Veröffentlichungstag und Bekanntmachung des Hinweises auf die Patenterteilung: **16.07.2003**
(21) Anmeldenummer: 00943600.7
(22) Anmeldetag: 11.05.2000
(51) Int. Cl.: B60N 2/02

(54) **STEUERVORRICHTUNG ZUR STEUERUNG VON STELLMOTOREN FÜR DIE VERSTELLUNG VERSCHIEDENER SITZTEILE EINES SITZES**
CONTROL DEVICE FOR CONTROLLING ADJUSTMENT MOTORS FOR ADJUSTING DIFFERENT PARTS OF A SEAT
DISPOSITIF SERVANT A COMMANDER DES MOTEURS DE POSITIONNEMENT POUR LE REGLAGE DE DIFFERENTES PARTIES D'UN SIEGE

(30) Priorität: 18.05.1999 DE 19922469; 25.09.1999 DE 19946021
(43) Veröffentlichungstag der Anmeldung: 13.02.2002
(73) Patentinhaber: Delphi Technologies Inc., Troy, MI 48007 (US)
(72) Erfinder: SOTTONG, Sascha, D-55444 Eckenroth (DE)
(74) Vertreter: Becker, Bernd, Dipl.-Ing.
(86) Internationale Anmeldenummer: DE0001533
(87) Internationale Veröffentlichungsnummer: WO00069669

(56) Entgegenhaltungen:
- WO-A-97/04985
- FR-A- 2 696 384
- FR-A- 2 737 686
- GB-A- 2 333 226
- US-A- 4 479 626
- US-A- 5 140 235
- US-A- 5 278 363
- US-A- 5 483 853

## Beschreibung

Die Erfindung bezieht sich auf eine Steuervorrichtung zur Steuerung von Stellmotoren für die Verstellung verschiedener Sitzteile eines Sitzes, insbesondere eines Kraftfahrzeugsitzes, mit mindestens zwei Schaltern für die vorzunehmenden Verstellbewegungen des Sitzes, wobei der eine Schalter als Auswahlschalter für unterschiedliche Schaltmenüs der Einstellbereiche der Sitzteile und der andere Schalter als Multifunktionsschalter für die Verstellbewegungen des jeweiligen Einstellbereiches des Sitzteils ausgebildet ist.

Insbesondere Kraftfahrzeuge werden in zunehmendem Maß mit verstellbaren Kraftfahrzeugsitzen ausgestattet, die eine Anpassung an den Körper eines Fahrzeugbenutzers zur ennüdungsfreien Fahrt ermöglichen. Ursprünglich war lediglich eine Längsverstellung des Kraftfahrzeugsitzes und eine Neigungsverstellung der Sitzlehne mittels entsprechender mechanischer Einrichtungen vorgesehen. Bei neueren Entwicklungen von Kraftfahrzeugsitzen werden neben den vorgenannten Verstellmöglichkeiten auch Änderungen der Sitzhöhe, der Sitzflächenneigung, -breite und -tiefe, der Sitzlehnenbreite, des Sitzlehnenkopfes, der Einstellungen der Kopfstütze sowie der Lendenstütze mittels Stellmotoren ermöglicht. Zur Ansteuerung der unterschiedlichen Stellmotoren ist eine entsprechende Anzahl elektrischer Schalter notwendig, die oftmals als Wippentastschalter ausgebildet und Bestandteile einer entsprechenden Steuervorrichtung sind. Hierbei erweist es sich als problematisch, daß der Fahrzeugführer durch die Auswahl unter den vorhandenen Schaltern beim Lenken des Kraftfahrzeuges vom Verkehrsgeschehen abgelenkt wird, falls er die Einstellung des Kraftfahrzeugsitzes als unbequem empfindet und im fließenden Verkehr ändern möchte.

Die EP 0 548 656 A1 offenbart eine Konsole für elektrische Schalter zur fernbetätigten Einstellung von Kraftfahrzeugsitzen mit einstellbaren Sitzflächen und Rückenlehnen sowie ausfahrbaren Nackenstützen. Die als Zweiwege-Schiebetaster ausgebildeten Schalter sind in zwei Gruppen angeordnet, die einerseits zur Einstellung der Sitzfläche und andererseits zur Einstellung der Neigung der Rückenlehne sowie der Einstellung der Nackenstütze dienen. Durch die Bildung der beiden Funktionsgruppen wird allerdings die Anzahl notwendiger Schalter für die Einstellungen des Kraftfahrzeugsitzes nicht reduziert.

Im weiteren zeigt die DE 197 28 743 C1 eine Steuereinrichtung zur Steuerung von Stellmotoren für die Verstellung verschiedener Sitzteile eines Kraftfahrzeugsitzes, wobei die Verstellung der den Schaltern zugeordneten Griffstücke der Bedieneinheit entsprechend der vorzunehmenden Verstellbewegungen des Kraftfahrzeugsitzes in sinnfälligen Richtungen erfolgt. Die Griffstücke der Bedieneinheit sind räumlich in Form eines Kraftfahrzeugsitzes ausgebildet. Die Bedieneinheit weist mindestens ein in sinnfälligen Richtungen zu verstellendes Griffstück auf, das einstückig räumlich in Form von zumindest zwei Sitzteilen ausgebildet ist, also einstückig zumindest zwei Griffstückbereiche aufweist. Hierdurch ist zwar die Anzahl der Betätigungselemente, nicht aber die Anzahl der elektrischen Schalter für die Stellmotoren reduziert. Außerdem muß der Fahrzeuglenker den der Verstellmöglichkeit des Kraftfahrzeugsitzes zugeordneten Griffstückbereich unter mehreren möglichen ertasten.

Auch aus der FR-A-2 737 686 ist eine Steuervorrichtung zur Steuerung von Stellmotoren für die Verstellung verschiedener Sitzteile eines Kraftfahrzeugsitzes bekannt. Die Steuervorrichtung umfasst mehrere Auswahlschalter für unterschiedliche Schaltmenüs der Einstellbereiche der Sitzteile sowie einen Multifunktionsschalter für die vorzunehmenden Verstellbewegungen des jeweiligen Einstellbereiches des Sitzes. Der Multifunktionsschalter ist als kreuzweise zu beaufschlagender Drucktastenschalter ausgebildet.

Darüber hinaus offenbart die FR-A-2 696 384 eine Steuervorrichtung zur Steuerung von Stellmotoren für die Verstellung verschiedener Sitzteile eines Kraftfahrzeugsitzes mit Auswahlschaltern in einem Feld und mit einem Multifunktionsschalter. Der Multifunktionsschalter umfasst kreuzweise zueinander angeordnete Einzelschalter für Verstellbewegungen der Sitzteile sowie einen "Enter"-Schalter, der nach einer Beaufschlagung der Einzelschalter zur Bestätigung der Verstellbewegungen betätigt werden muß.

Ferner ist aus der WO 97 04985 A eine Steuervorrichtung mit einer Steuereinheit zur Steuerung von Stellmotoren für die Verstellung verschiedener Sitzteile eines Kraftfahrzeugsitzes bekannt. Die in der Nähe eines Lenkrades des Kraftfahrzeuges angeordnete Steuereinheit umfasst mehrere als Dreh-, Schiebeoder Drucktastenschalter augebildete Einzelschalter von denen ein erster Einzelschalter zur Aktivierung einer gespeicherten Position der Sitzteile dient. Mit einem zweiten Einzeischalter, der als Auswahlschalter ausgestaltet ist werden die zugeordneten Stellmotoren selektiv aktiviert, die mittels weiterer Einzelschalter angesteuert werden. Um die mit den Einzelschaltern angesteuerten Verstellbewegungen visuell darzustellen, ist der Steuereinheit ein Bildschirm mit sinnfälligen Pictogrammen zugeordnet.

Es ist Aufgabe der Erfindung, eine Steuervorrichtung der eingangs genannten Art zu schaffen, die einen hohen Bedienkomfort bei einer gleichzeitig geringen Anzahl von Schaltern gewährleistet.

Erfindungsgemäß wird die Aufgabe dadurch gelöst, daß der Multifunktionsschalter ein kreuzweise beaufschlagbarer Schiebe-Drehschalter ist, dem in jedem Schaltmenü horizontale und/oder vertikale Verstellbewegungen sowie Neigungsverstellbewegungen für den ausgewählten Einstellbereich des Sitzteils zugeordnet sind.

Aufgrund dieser Maßnahmen ist eine geringe Anzahl von Schaltern zur Steuerung von Stellmotoren für die Versteilung verschiedener Sitzteile des Sitzes gegeben. Da lediglich ein Multifunktionsschalter für die Verstellbewegungen sowie ein Auswahlschalter für die Einstellbereiche der Sitzteile vorhanden sind, muß zur gewünschten Einstellung des Sitzes nicht unter einer relativ großen Anzahl von Schaltern ausgewählt werden, wodurch die Konzentration des Fahrzeuglenkers auf den fließenden Verkehr praktisch nicht beeinflußt wird. Die Kombination des Auswahlschalters mit dem Multifunktionsschalter bietet sonach eine schnelle Orientierung über die verschiedenen Einstellmöglichkeiten des Sitzes bei gleichzeitig hohem Bedienkomfort der Steuervorrichtung. Die unterschiedlichen Einstellbereiche des Sitzes bzw. der Sitzteile können beispielsweise durch eine Mehrfachbetätigung des Auswahlschalters angesteuert werden, wobei die Verstellbewegungen des Sitzes mit stets gleichen Beaufschlagungsrichtungen des Multifunktionsschalters gekoppelt sind. Durch die einheitliche Funktionsweise des Multifunktionsschalters in jedem Schaltmenü ist dieser leicht zu bedienen. Der Sitzinsasse, der den Sitz bzw. die Sitzteile verstellen will, kennt die Funktionsweise des Multifunktionsschalters nach einer relativ kurzen Eingewöhnungszeit. Die exakte Zuordnung der Verstellbewegungen zu den Beaufschlagungsrichtungen des Multifunktionsschaiters ist dadurch gewährleistet, daß der Multifunktionsschalter als ein kreuzweise beaufschlagbarer Schiebe-Drehschalter ausgebildet ist. Der Schiebe-Drehschalter ist sowohl in den entsprechenden Drehrichtungen als auch Schieberichtungen gleichzeitig beaufschlagbar, weshalb mehrere Verstellbewegungen des Sitzes bzw. der Sitzteile simultan erfolgen können.

Nach einer vorteilhaften Ausgestaltung der Erfindung sind ein erster Auswahlschalter für das Schaltmenü des gesamten Sitzes, ein zweiter Auswahlschalter für das Schaltmenü der Sitzfläche und ein dritter Auswahlschalter für das Schaltmenü der Sitzlehne vorgesehen. Hierdurch ist eine gezielte Auswahl des zu verstellenden Sitzteils möglich.

Um eine erhöhte Bequemlichkeit und eine ergonomisch günstige Sitzhaltung des Sitzinsassen zu gewährleisten, ist bevorzugt ein vierter Auswahlschalter für das Schaltmenü einer Lendenstütze vorgesehen. Die Lendenstütze bewirkt eine mehr oder weniger starke Lordose, also eine Verkrümmung der Wirbelsäule im Lendenwirbelbereich, wenn sich der Sitzinsasse an die Sitzlehne anlehnt.

Zum vereinfachten Auffinden eines entsprechenden Schalters der Steuervorrichtung sind die Auswahlschalter sinnfällig zum Einstellbereich des Sitzes zueinander angeordnet. Zweckmäßigerweise sind die Auswahlschalter L-förmig zueinander angeordnet, wobei der horizontale Schenkel der L-Form in Richtung des Multifunktionsschalters weist. Bevorzugt ist der erste Auswahlschalter im Winkel, der zweite Auswahlschalter im horizontalen Schenkel und der dritte Auswahlschalter im vertikalen Schenkel der L-Form angeordnet, und der vierte Auswahlschalter liegt im Freiraum zwischen den Schenkeln der L-Form. Aufgrund dieser Anordnung der Auswahlschalter wird der Umriß des Sitzes symbolisiert, so daß der Sitzinsasse anhand der Anordnung des jeweiligen Auswahlschalters erkennt, für welchen Einstellbereich der betreffende Auswahlschalter vorgesehen ist.

Um den Bedienkomfort der Steuervorrichtung zu erhöhen, ist jeder Auswahlschalter als Tastschalter ausgebildet. Somit ist die Auswahl des gewünschten Einstellbereiches des Sitzteils durch eine kurzzeitige Beaufschlagung des entsprechenden Auswahlschalters sichergestellt.

Damit sowohl die Auswahlschalter selbst als auch deren Aktivierung leicht erkennbar ist, ist ein Betätigungselement jedes Auswahlschalters mit einem durch eine Such- und Funktionsbeleuchtung hinterleuchtbarem Symbol versehen. Der aktive Auswahlschalter ist demnach durch die gegenüber der Suchbeleuchtung der anderen Auswahlschalter anders gefärbte oder hellere Funktionsbeleuchtung eindeutig identifizierbar.

Zur Erleichterung der haptischen Erkennbarkeit der Auswahlschalter und deren Zuordnung zu dem entsprechenden Einstellbereich des Sitzteils, sind der erste, zweite und dritte Auswahlschalter in eine gemeinsame und der vierte Auswahlschalter in eine separate jeweils entsprechend ausgeformte Mulde eines Gehäuses eingesetzt. Die Mulden und deren Konturen sind relativ leicht durch Tasten zu erfühlen.

Nach einer weiteren vorteilhaften Ausgestaltung der Erfindung sind dem Multifunktionsschalter in jedem Schaltmenü horizontale und/oder vertikale Verstellbewegungen sowie Neigungsverstellbewegungen für den ausgewählten Einstellbereich des Sitzteils zugeordnet.

Gemäß einer vorteilhaften Weiterbildung des Erfindungsgedankens sind aus einer Nullage des Multifunktionsschalters den gegenläufigen Drehbewegungen eines Betätigungselementes Neigungsverstellbewegungen und der horizontalen sowie der vertikalen Schiebebewegung des Betätigungselementes horizontale und vertikale Verstellbewegungen des Sitzteils in die eine oder andere Richtung zugeordnet. Somit sind die Bewegungen des Betätigungselementes des Multifunktionsschalters sinnfällig zu den Verstellbewegungen des ausgewählten Sitzteils, wodurch der Bedienkomfort der Steuervorrichtung wesentlich verbessert ist.

Um weitere optionale Verstellbewegungen der Sitzteile mit lediglich einem Multifunktionsschalter zu erreichen, ist zweckmäßigerweise der Schiebe-Drehschalter zusätzlich als Druckoder Druck-Zugschalter ausgebildet. Hierdurch stehen weitere Schaltfunktionen zur Verfügung.

Bevorzugt ist das Betätigungselement des Multifunktionsschalters kegelstumpfförmig ausgeführt, dessen große Stirnfläche in einer zylindrischen Vertiefung des Gehäuses mit Spiel aufgenommen ist und dessen kleine, freie Stirnfläche mit Symbolen versehen ist. Die Formgebung des Betätigungselementes gewährleistet ein sicheres Greifen während der Beaufschlagung des Multifunktionsschalters. Im weiteren bildet die Vertiefung des Gehäuses einen Anschlag für die horizontale und die vertikale Schiebebewegung des Betätigungselementes und schützt den Multifunktionsschalter vor Beschädigung bei einer erhöhten Krafteinwirkung.

Zur visuellen Erkennbarkeit der Funktionen des Multifunktionsschalters sind zweckmäßigerweise die Symbole des Betätigungselementes des Multifunktionsschalters mittels einer Such- und Funktionsbeleuchtung hinterleuchtbar.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

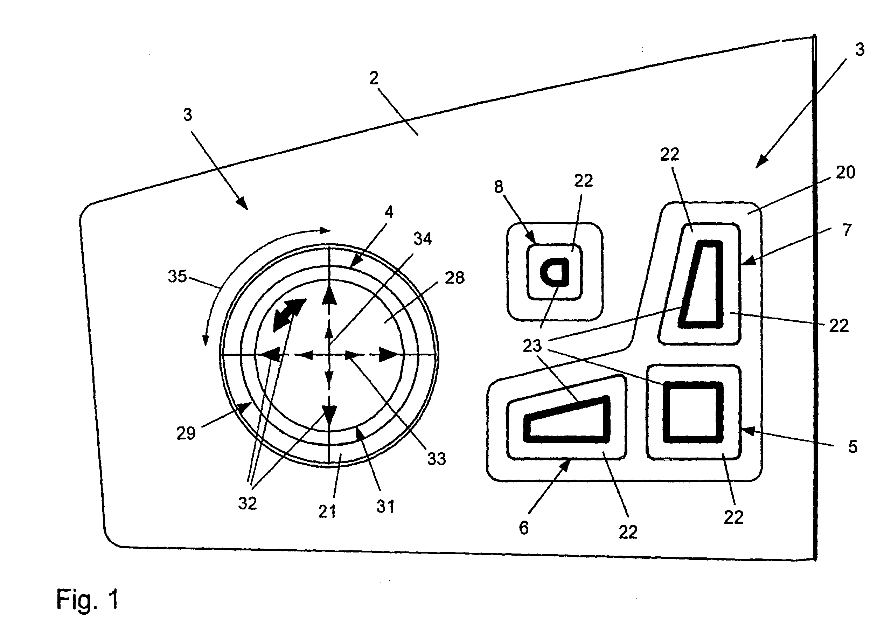

- Fig.1: eine Vorderansicht der erfindungsgemäßen Steuervorrichtung und

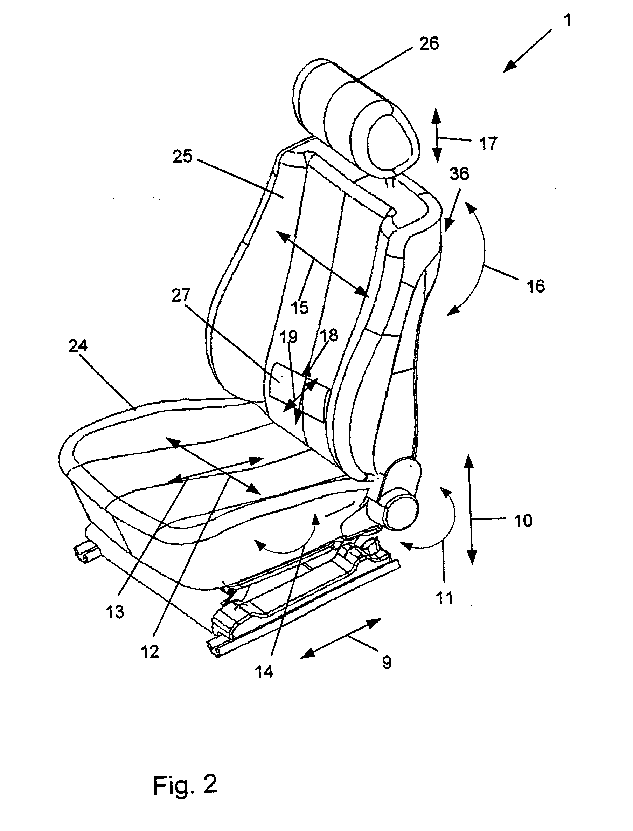

- Fig.2: eine perspektivische Darstellung eines Kraftfahrzeugsitzes, dessen Sitzteile mittels der Steuervorrichtung nach Fig. 1 verstellbar sind.

Die Steuervorrichtung dient zur Verstellung eines Sitzes 1 und umfaßt in einem Gehäuse 2 angeordnete Schalter 3 zur Steuerung nicht dargestellter Stellmotoren, von denen einer als Multifunktionsschalter 4 und vier weitere als Auswahlschalter 5, 6, 7, 8 ausgebildet sind. Dem als kreuzweise beaufschlagbarer Schiebe- Drehschalter ausgeführten Multifunktionsschalter 4 sind die Schaitmenüs für die durch die Doppelpfeile 9 bis 19 gekennzeichneten Verstellbewegungen des jeweiligen Einstellbereiches der Sitzteile 24, 25, 26, 27 bzw. des Sitzes 1 zugeordnet.

Die Auswahlschalter 5, 6, 7 sind L-förmig zueinander angeordnet, wobei der erste Auswahlschalter 5 im Winkel, der zweite Auswahlschalter 6 im horizontalen Schenkel und der dritte Auswahlschalter 7 im vertikalen Schenkel in einer gemeinsamen Mulde 20 des Gehäuses 2 angebracht sind. Der vierte Auswahlschalter 8 befindet sich im Freiraum zwischen den Schenkeln der L-Form und ist in einer separaten Mulde 21 des Gehäuses aufgenommen. Die Betätigungselemente 22 der als Tastschalter ausgestalteten Auswahlschalter 5, 6, 7, 8 sind mit Symbolen 23 versehen, die durch eine nicht dargestellte Such- und Funktionsbeleuchtung hinterleuchtbar sind.

Um eine sinnfällige Zuordnung zwischen den Auswahlschaltern 5, 6, 7, 8 und dem jeweiligen Schaltmenü der Einstellbereiche der Sitzteile herzustellen, ist der erste Auswahlschalter 5 für das Schaltmenü des gesamten Sitzes 1, der zweite Auswahlschalter 6 für das Schaltmenü der Sitzfläche 24, der dritte Auswahlschalter 7 für das Schaltmenü der Sitzlehne 25 mit zugeordneter Kopfstütze 26 und der vierte Auswahlschalter 8 für das Schaltmenü der in der Sitzlehne integrierten Lendenstütze 27 vorgesehen.

Ein kegelstumpfförmiges Betätigungselement 28 des Multifunktionsschalters 4 ist mit seiner großen Stirnfläche 29 in einer Vertiefung 30 des Gehäuses 2 mit Spiel aufgenommen. Die kleine Stirnfläche 31 des Betätigungselementes 28 ist mit Symbolen 32 versehen, die mittels einer Such- und Funktionsbeleuchtung hinterleuchtbar sind. Das Betätigungselement 28 läßt sich gemäß den Doppelpfeilen 33, 34 kreuzweise verschieben und entsprechend dem Doppelpfeil 35 verdrehen. Diese Bewegungen erfolgen aus einer Nullage heraus, in die das Betätigungselement selbsttätig zurückkehrt.

Im folgenden wird die Funktionsweise der Steuervorrichtung detailliert erläutert. Nach einer Beaufschlagung des ersten Auswahlschalters 5 und dem horizontalen Verschieben des Betätigungselementes 28 des Multifunktionsschalters 4 in eine der Richtungen des Doppelpfeils 33 erfolgt eine vertikale Verstellbewegung 9 des gesamten Sitzes 1 in eine hierzu korrespondierende Richtung. Nach dem Verschieben des Betätigungselementes 28 in die eine oder andere Richtung des Doppelpfeils 34 wird der Sitz 1 in seiner Höhe 10 verstellt. Das Verdrehen des Betätigungselementes 28 gemäß dem Doppelpfeil 35 bewirkt eine entsprechend gerichtete Neigungsverstellbewegung 11 der Sitzlehne 25. Wird das Betätigungselement 28 des Multifunktionsschalters 4 losgelassen, erfolgt eine Rückstellung desselben in die Nullage und das verstellte Sitzteil 1, 24, 25, 26, 27 verharrt in seiner erreichten Position.

Die Betätigung des zweiten Auswahlschalters 6 bewirkt die Auswahl des Schaltmenüs der Sitzfläche 24. Auf das entsprechende Verschieben des Betätigungselementes 28 des Multifunktionsschalters 4 gemäß dem Doppelpfeil 33 erfolgt eine Vergrößerung oder Verkleinerung der Sitztiefe 13 und mit der Beaufschlagung des Betätigungselementes 28 gemäß dem Doppelpfeil 34 ist die Breite der Sitzfläche 24 entsprechend dem Doppelpfeil 12 zu regulieren. Eine Verstellung der Neigung 14 der Sitzfläche 24 wird durch entsprechendes Verdrehen des Betätigungselementes 28 in die eine oder andere Richtung des Doppelpfeiles 35 vorgenommen.

Durch das Niederdrücken des Betätigungselementes 22 des dritten Auswahlschalters 7 erfolgt ein Wechsel zu dem Schaltmenü der Sitzlehne 25. Die Sitzlehne 25 ist in ihrer Breite entsprechend dem Doppelpfeil 15 durch ein Verschieben des Betätigungselementes 28 des Multifunktionsschalters 4 gemäß dem Doppelpfeil 33 verstellbar. Im weiteren kann eine Neigungsverstellbewegung 16 eines Sitzlehnenkopfes 36 durch das Verdrehen des Betätigungselementes 28 gemäß dem Doppelpfeil 35 vorgenommen werden. Die Beaufschlagung des Betätigungselementes 28 in eine der Richtungen des Doppelpfeiles 34 bewirkt eine Höhenverstellung 17 der Kopfstütze 25.

Schließlich führt die Betätigung des vierten Auswahlschalters 8 in das Schaltmenü für die Lendenstütze 27, die durch das Verschieben des Betätigungselementes 28 des Multifunktionsschalters 4 gemäß dem Doppelpfeil 33 oder 34 in ihrer Tiefe entsprechend dem Doppelpfeil 19 oder in ihrer Höhe gemäß dem Doppelpfeil 18 verstellt wird. Da die Lendenstütze 27 in der Neigung nicht verstellbar ist, ist der Drehbewegung entsprechend dem Doppelpfeil 35 des Betätigungselementes 28 die Höhenverstellbewegung gemäß dem Doppelpfeil 18 zugeordnet.

## Patentansprüche

1. Steuervorrichtung zur Steuerung von Stellmotoren für die Verstellung verschiedener Sitzteile (24, 25, 26, 27) eines Sitzes (1), insbesondere eines Kraftfahrzeugsitzes, mit mindestens zwei Schaltern (3) für die vorzunehmenden Verstellbewegungen (9 bis 19) des Sitzes (1), wobei der eine Schalter (1) als Auswahlschalter (5, 6, 7 oder 8) für unterschiedliche Schaltmenüs der Einstellbereiche der Sitzteile (1, 24, 25, 26, 27) und der andere Schalter als Multifunktionsschalter (4) für die Verstellbewegungen (9 bis 19) des jeweiligen Einstellbereiches des Sitzteils (1 24, 25, 26, 27) ausgebildet ist, **dadurch gekennzeichnet, daß** der Multifunktionsschalter (4) ein kreuzweise beaufschlagbarer Schiebe-Drehschalter ist, dem in jedem Schaltmenü horizontale (9, 12, 13, 15, 19) und/oder vertikale Verstellbewegungen (10, 17, 18) sowie Neigungsverstellbewegungen (11, 14, 16) für den ausgewählten Einstellbereich des Sitzteils (1, 23, 24, 25) zugeordnet sind.

2. Steuervorrichtung nach Anspruch 1, **dadurch gekennzeichnet, daß** ein erster Auswahlschalter (5) für das Schaltmenü des gesamten Sitzes (1), ein zweiter Auswahlschalter (6) für das Schaltmenü der Sitzfläche (24) und ein dritter Auswahischalter (7) für das Schaltmenü der Sitzlehne (25) vorgesehen sind.

3. Steuervorrichtung nach den Ansprüchen 1 und 2, **dadurch gekennzeichnet, daß** ein vierter Auswahlschalter (8) für das Schaltmenü einer Lendenstütze (27) vorgesehen ist.

4. Steuervorrichtung nach einem der Ansprüche 1 bis 3, **dadurch gekennzeichnet, daß** die Auswahlschalter (5, 6, 7, 8) sinnfällig zum Einstellbereich des Sitzes (1) zueinander angeordnet sind.

5. Steuervorrichtung nach einem der Ansprüche 1 bis 4, **dadurch gekennzeichnet, daß** die Auswahlschalter (5, 6, 7, 8) L-förmig zueinander angeordnet sind, wobei der horizontale Schenkel der L-Form in Richtung des Multifunktionsschalters (4) weist.

6. Steuervorrichtung nach Anspruch 5, **dadurch gekennzeichnet, daß** der erste Auswahlschalter (5) im Winkel, der zweite Auswahlschalter (6) im horizontalen Schenkel und der dritte Auswahlschalter (7) im vertikalen Schenkel der L-Form angeordnet ist, und der vierte Auswahlschalter (8) im Freiraum zwischen den Schenkeln der L-Form liegt.

7. Steuervorrichtung nach einem der Ansprüche 1 bis 6, **dadurch gekennzeichnet, daß** jeder Auswahlschalter (5, 6, 7, 8) als Tastschalter ausgebildet ist.

8. Steuervorrichtung nach einem der Ansprüche 1 bis 7, **dadurch gekennzeichnet, daß** ein Betätigungselement (22) jedes Auswahlschalters (5, 6, 7, 8) mit einem durch eine Such- und Funktionsbeleuchtung hinterleuchtbarem Symbol (23) versehen ist.

9. Steuervorrichtung nach einem der Ansprüche 1 bis 8, **dadurch gekennzeichnet, daß** der erste (5), zweite (6) und dritte Auswahlschalter (7) in eine gemeinsame (20) und der vierte Auswahlschalter (8) in eine separate jeweils entsprechend ausgeformte Mulde (21) eines Gehäuses (2) eingesetzt sind.

10. Steuervorrichtung nach Anspruch 1, **dadurch gekennzeichnet, daß** aus einer Nullage des Multifunktionsschalters (4) den gegenläufigen Drehbewegungen (34) eines Betätigungselementes (27) Neigungsverstellbewegungen (11, 14, 16) und der horizontalen (32) sowie der vertikalen Schiebebewegung (33) des Betätigungselementes (27) horizontale ((9, 12, 13, 15, 19) und vertikale Verstellbewegungen (10, 17, 18) des Sitzteils (1, 23, 24, 25, 26) in die eine oder andere Richtung zugeordnet sind.

11. Steuervorrichtung nach Anspruch 1, **dadurch gekennzeichnet, daß** der Schiebe-Drehschalter zusätzlich als Druck- oder Druck-Zugschalter ausgebildet ist.

12. Steuervorrichtung nach einem der Ansprüche 1 bis 13, **dadurch gekennzeichnet, daß** das Betätigungselement (28) des Multifunktionsschalters (4) kegelstumpfförmig ausgeführt ist, dessen große Stirnfläche (29) in einer zylindrischen Vertiefung (30) des Gehäuses (2) mit Spiel aufgenommen ist und dessen kleine, freie Stirnfläche (31) mit Symbolen (32) versehen ist.

13. Steuervorrichtung Anspruch 14, **dadurch gekennzeichnet, daß** die Symbole (32) des Betätigungselementes (28) des Multifunktionsschalters (4) mittelseiner Such- und Funktionsbeleuchtung hinterieuchtbar sind.

## Claims

1. Control apparatus for controlling setting motors for the adjustment of various seat parts (24, 25, 26, 27) of a seat (1), more especially an automotive vehicle seat, said apparatus having at least two switches (3) for the adjustment movements (9 to 19) of the seat (1) which are to be effected, the one switch (3) being in the form of a selector switch (5, 6, 7 or 8) for different switching menus for the setting ranges of the seat parts (1, 24, 25, 26, 27), and the other switch being in the form of a multi-functional switch (4) for the adjustment movements (9 to 19) of the respective setting range of the seat part (1, 24, 25, 26, 27), **characterised in that** the multi-functional switch (4) is a slidable rotary switch, which can be acted upon crosswisely and has associated therewith, in each switching menu, horizontal displacement movements (9, 12, 13, 15, 19) and/or vertical adjustment movements (10, 17, 18) as well as inclined adjustment movements (11, 14, 16) for the selected setting range of the seat part (1, 23, 24, 25).

2. Control apparatus according to claim 1, **characterised in that** a first selector switch (5) is provided for the switching menu of the entire seat (1), a second selector switch (6) is provided for the switching menu of the seat area (24), and a third selector switch (7) is provided for the switching menu of the seat back (25).

3. Control apparatus according to claims 1 and 2, **characterised in that** a fourth selector switch (8) is provided for the switching menu of a lumbar support (27).

4. Control apparatus according to one of claims 1 to 3, **characterised in that** the selector switches (5, 6, 7, 8) are obviously disposed relative to one another for the setting range of the seat (1).

5. Control apparatus according to one of claims 1 to 4, **characterised in that** the selector switches (5, 6, 7, 8) are disposed in an L-shaped manner relative to one another, the horizontal leg of the "L" pointing in the direction of the multi-functional switch (4).

6. Control apparatus according to claim 5, **characterised in that** the first selector switch (5) is disposed in the corner, the second selector switch (6) is disposed in the horizontal leg, and the third selector switch (7) is disposed in the vertical leg of the "L", and the fourth selector switch (8) lies in the space between the legs of the "L".

7. Control apparatus according to one of claims 1 to 6, **characterised in that** each selector switch (5, 6, 7, 8) is in the form of a keying switch.

8. Control apparatus according to one of claims 1 to 7, **characterised in that** an actuating member (22) of each selector switch (5, 6, 7, 8) is provided with a symbol (23), which can be illuminated from behind by a search and function illumination.

9. Control apparatus according to one of claims 1 to 8, **characterised in that** the first selector switch (5), the second selector switch (6) and the third selector switch (7) are inserted into a common depression (20) of a housing (2), and the fourth selector switch (8) is inserted into a separate, appropriately moulded trough (21) of said housing.

10. Control apparatus according to claim 1, **characterised in that**, from a zero position of the multi-functional switch (4), the contrarotating rotary movements (34) of an actuating member (27) have inclined adjustment movements (11, 14, 16) associated therewith, and the horizontal sliding movement (32), as well as the vertical sliding movement (33) of the actuating member (27) have associated therewith horizontal displacement movements (9, 12, 13, 15, 19) and vertical adjustment movements (10, 17, 18) of the seat part (1, 23, 24, 25, 26) into one or other direction.

11. Control apparatus according to claim 1, **characterised in that** the slidable rotary switch is additionally in the form of a push-button switch or a push-pull switch.

12. Control apparatus according to one of claims 1 to 11, **characterised in that** the actuating member (28) of the multi-functional switch (4) has a frusto-conical configuration, the large end face (29) of which is accommodated with some clearance in a cylindrical recess (30) of the housing (2), and the small, free end face (31) of which is provided with symbols (32).

13. Control apparatus according to claim 12, **characterised in that** the symbols (32) of the actuating member (28) of the multi-functional switch (4) can be illuminated from behind by means of a search and function illumination.

## Revendications

1. Dispositif de commande pour commander des moteurs de positionnement pour le réglage de différentes parties de siège (24, 25, 26, 27) d'un siège (1), en particulier d'un siège de véhicule automobile, comportant au moins deux commutateurs (3) pour les mouvements de réglage (9 à 12) à exécuter du siège (1), un commutateur (1) étant réalisé en tant que sélecteur (5, 6, 7 ou 8) pour différents menus de commande des plages de réglage des parties de siège (1, 24, 25, 26, 27) et l'autre commutateur en tant que commutateur multifonctions (4) pour les mouvements de réglage (9 à 19) de la plage de réglage correspondante de la partie de siège (1, 24, 25, 26, 27), **caractérisé en ce que** le commutateur multifonctions (4) est un interrupteur coulissant et tournant pouvant être sollicité de manière croisée, auquel sont associés dans chaque menu de commande des mouvements de réglage horizontaux (9, 12, 13, 15, 19) et/ou verticaux (10, 17, 18) ainsi que des mouvements de réglage d'inclinaison (11, 14, 16) pour la plage de réglage sélectionnée de la partie de siège (1, 23, 24, 25).

2. Dispositif de commande selon la revendication 1, **caractérisé en ce qu'**un premier sélecteur (5) pour le menu de commande de l'ensemble du siège (1), un deuxième sélecteur (6) pour le menu de commande de la surface d'assise (24) et un troisième sélecteur (7) pour le menu de commande du dossier du siège (25) sont prévus.

3. Dispositif de commande selon les revendications 1 et 2, **caractérisé en ce qu'**un quatrième sélecteur (8) pour le menu de commande d'un appui lombaire (27) est prévu.

4. Dispositif de commande selon l'une des revendications 1 à 3, **caractérisé en ce que** les sélecteurs (5, 6, 7, 8) sont disposés les uns par rapport aux autres de manière évidente par rapport à la plage de réglage du siège (1).

5. Dispositif de commande selon l'une des revendications 1 à 4, **caractérisé en ce que** les sélecteurs (5, 6, 7 et 8) sont disposés les uns par rapport aux autres en L, la branche horizontale du L s'étendant dans la direction du commutateur multifonction (4).

6. Dispositif de commande selon la revendication 5, **caractérisé en ce que** le premier sélecteur (5) est disposé dans l'angle, le deuxième sélecteur (6) dans la branche horizontale et le troisième sélecteur (7) dans la branche verticale du L et le quatrième sélecteur (8) se situe dans l'espace libre entre les branches du L.

7. Dispositif de commande selon l'une des revendications 1 à 6, **caractérisé en ce que** chaque sélecteur (5, 6, 7, 8) est réalisé comme un commutateur à touche.

8. Dispositif de commande selon l'une des revendications 1 à 7, **caractérisé en ce qu'**un élément d'actionnement (22) de chaque sélecteur (5, 6, 7, 8) est pourvu d'un symbole (23) qui peut être éclairé de l'arrière par un éclairage de recherche et fonctionnel.

9. Dispositif de commande selon l'une des revendications 1 à 8, **caractérisé en ce que** le premier sélecteur (5), le deuxième sélecteur (6) et le troisième sélecteur (7) sont insérés dans un creux commun (20) et le quatrième sélecteur (8) dans un creux séparé (21), chacun de forme correspondante, d'un boîtier (2).

10. Dispositif de commande selon la revendication 1, **caractérisé en ce qu'**à partir d'une position neutre du commutateur multifonctions (4), aux mouvements de rotation (34) en sens contraire d'un élément d'actionnement (27) sont associés des mouvements de réglage d'inclinaison (11, 14, 16) et au mouvement coulissant horizontal (32) ainsi qu'au mouvement coulissant vertical (33) de l'élément d'actionnement (27) sont associés des mouvements de réglage horizontaux (9, 12, 13, 15, 19) et verticaux (10, 17, 18) de la partie de siège (1, 23, 24, 25, 26) dans l'un ou l'autre sens.

11. Dispositif de commande selon la revendication 1, **caractérisé en ce que** l'interrupteur coulissant et tournant est réalisé en outre comme un interrupteur à poussoir ou un interrupteur à pousser et tirer.

12. Dispositif de commande selon l'une des revendications 1 à 13, **caractérisé en ce que** l'élément d'actionnement (28) du commutateur multifonctions (4) est de forme tronconique dont la grande face frontale (9) est logée avec jeu dans un renfoncement (30) cylindrique du boîtier (2) et dont la petite face frontale (31) libre est pourvue de symboles (32).

13. Dispositif de commande selon la revendication 14, **caractérisé en de que** les symboles (32) de l'élément d'actionnement (28) du commutateur multifonctions (4) peuvent être éclairés de l'arrière au moyen d'un éclairage de recherche et fonctionnel.
